# FASCICULE DE BREVET EUROPEEN

(11) **EP 1 106 472 B1**
(45) Date de publication et mention de la délivrance du brevet: **16.03.2005**
(21) Numéro de dépôt: 00500218.3
(22) Date de dépôt: 25.10.2000
(51) Int. Cl.: B62B 3/06

(54) **Dispositif pour transport de charges**
Lastentransportvorrichtung
Load transporting device

(30) Priorité: 10.12.1999 ES 9902710
(43) Date de publication de la demande: 13.06.2001
(73) Titulaire: Mento Martin, Franco Félix, Tudela de Duero (Valladolid) (ES)
(72) Inventeur: Mento Martin, Franco Félix, Tudela de Duero (Valladolid) (ES)
(74) Mandataire: Urizar Anasagasti, Jesus Maria

(56) Documents cités:
- DE-A- 3 627 913
- DE-A- 19 610 841
- GB-A- 475 746
- GB-A- 729 646

## Description

La présente invention comme son propre nom l'indique concerne un élément tracteur permettant de déplacer des charges mortes, c'est à dire des éléments ne disposant pas de moyens de roulage et qui dans des conditions normales sont déplacés suspendus ou levés par un moyen mécanique, tandis qu'avec ce dispositif il va se déplacer en roulant avec les propres moyens de roulage inclus en lui.

Les conteneurs de matériaux ou de décombres de la construction, les palettes d'empilement de marchandises et d'autres type d'éléments à caractéristiques similaires ne peuvent se déplacer qu'en étant levés par un véhicule muni d'un système de levage de ceux-ci, en ayant besoin d'un grand espace de manoeuvre et en second lieu de la possibilité d'accès du véhicule en question à l'endroit où se trouve la charge. Lors du ramassage de conteneurs de décombres les camions actuellement existants réalisant les opérations de monté et de descente du conteneur au véhicule depuis la partie postérieure de celui-ci ont besoin d'un espace de manoeuvre d'environ 10 mètres, ce type de camion ne peut pas ramasser des conteneurs dans des espaces couverts où le camion ne peut pas accéder, ni dans des rues piétonnes ou très étroites où le véhicule lui-même en peut pas accéder ou bien elles manquent d'espace suffisant pour la manoeuvrabilité. Les véhicules élévateurs de charges déposées sur des palettes sont utiles lorsqu'ils sont employés dans un magasin où les marchandises sont stockées par ce moyen, mais ils manquent d'ôpérativité dans la rue car ils sont limités au niveau de leur charge et ce qui est plus important au niveau de la visibilité que le conducteur du véhicule doit avoir, raison pour laquelle ils ne peuvent pas se déplacer sur la voie publique.

Un autre dispositif de transport de charges est divulgué dans le document GB-A-729 646.

Le dispositif de la présente invention résout de façon complètement favorable ce problème car il a été spécialement conçu pour transporter des grandes charges (entre 2 et 4 T), par des endroits difficiles ou très difficiles d'y accéder, soit par l'étroitesses (rues, cour, caves ou d'autres endroits couverts) ou des zones à accès restreint des véhicules (jardins, parcs, rues piétonnes, etc.)

Ce dispositif est formé par un moyen tracteur comprenant une structure support d'un moteur et de commandes d'actionnement, prolongé vers la zone avant où il incopore un siège, appui de la charge à transporter, qui est encadré par les roues motrices capables de supporter le poids de la charge. Dans la zone centrale il dispose de roues montées en demi-axes extractibles, demeurant dans le dispositif tandis que celui-ci se déplace libre de charge, en les cédant à celle-ci à un moment donné pour monter chacune des roues latéralement à une extrémité, tandis qu'à l'extrémité opposée est montée la charge sur ledit siège, situé entre les deux roues motrices, en maintenant ainsi le corps tracteur élevé, en position sensiblement horizontale, de manière qu'à cette position il est possible de déplacer la charge en roulant et au moyen du moteur compris dans ce dispositif, en la conduisant même par des endroits très difficiles d'y accéder.

On comprendra mieux l'objet de la présente invention, au moyen de la description suivante effectuée sur la base d'un exemple pratique de réalisation. Cette description est réalisée au moyen des dessins des plans ci-joint, où:
La figure 1 montre dans une vue générale en perspective le dispositif de transport de charge, objet de la présente invention.
La figure 2 représente dans une section transversale et en détail l'élément d'appui (7) de la charge.
La figure 3 montre dans une vue en perspective une des roues arrière (6) du dispositif.
La figure 4 représente aussi en détail et en perspective un dispositif de déconnexion de la transmission présenté par cet élément tracteur.
La figure 5 montre une vue en perspective et en détail d'un moyen supplémentaire de levage de l'élément tracteur tandis que les travaux de mise en place ou de remise en place des roues supplémentaires (6) sont réalisés.

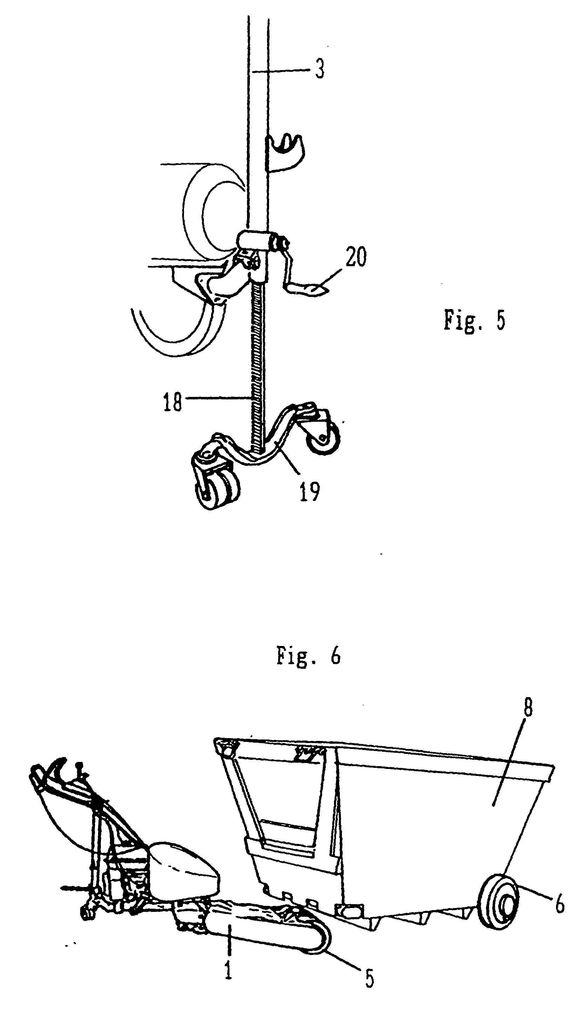

Finalement, la figure 6 montre une vue en perspective de ce dispositif de transport de charges en disposition de transporter un conteneur (8) du type de ceux employés habituellement pour le transport de matériaux ou de décombres de construction.

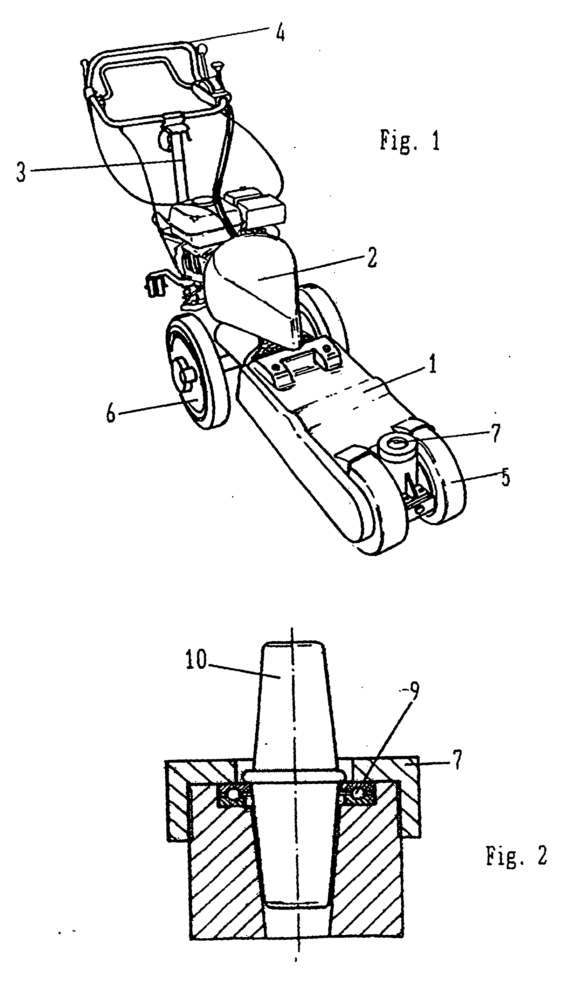

En faisant tout d'abord référence à la figure 1, on y observe le dispositif de transport de charge, objet de la présente invention en disposition de se déplacer comme un moyen autonome, en incorporant à cet effet deux groupes de roues (5) et (6), desquelles le groupe avant (5) est situé dans le prolongement présentant la structure de ce moyen tracteur (1) vers la partie avant, en présentant entre cette paire de roues motrices (5) un siège (7) constituant le point d'appui de la charge à transporter. Sur la partie arrière il présente un élément moteur (2) et à l'arrière un ensemble de commandes (4) pour la manoeuvrabilité du tracteur dans des conditions de fonctionnement, accélération, frein ou direction. Finalement, sous l'élément moteur il y a les roues (6), montées en demi-axes extractibles, pour permettre de les retirer du dispositif (1) et de les monter dans la charge (8) pour, en montant le dispositif à l'éxtrémité opposée, effectuer sa remise en place même dans des endroits très difficiles d'y accéder, à la position représentée en détail dans la figure (6).

Le siège (7) constituant le point d'appui par une des extrémités de la charge (8) est représenté plus en détail dans la figure (2) et il comprend un roulement axial (9) permettant la rotation de l'appui (7), ou ce qui est la même chose du tracteur (1) par rapport à la charge (8), afin de pouvoir adopter différents angles et par conséquent effectuer des courbes à angles importants.

La fixation de l'élément tracteur (1) à la charge (8) est effectuée au moyen d'un boulon (10) introduit dans l'appui (7), (voir figure 2) en porte-à-faux par dessus celui-ci, en s'introduisant à son tour dans la charge (8) dans un orifice équivalent, en établisssant ainsi le point de tirage approprié.

Les roues (6) montées sur la partie arrière du véhicule (1) comme on l'a déjà mentionné sont montées en demi-axes (11), elles sont introduites dans la structure dudit véhicule (1) ou dans des points aménagés à cet effet dans la charge (8), en étant retenues en position dans les deux circonstances au moyen d'une cheville (14) présentant une tête aimantée pour éviter leur chute ou extraction involontaire. De cette façon et pendant que le dispositif pour le transport se déplace de manière autonome, la roue (6) est fixée à la structure arrière de celui-ci, mais lors du transport de la charge (8) on extrait lesdites paires de roues et elle cèdent leur place à la charge en se plaçant à l'extrémité opposée au point d'appui (7), pour que la charge se transforme en un moyen de transport autonome muni de trois roues et d'un moteur d'actionnement qui est celui du dispositif de transport (1).

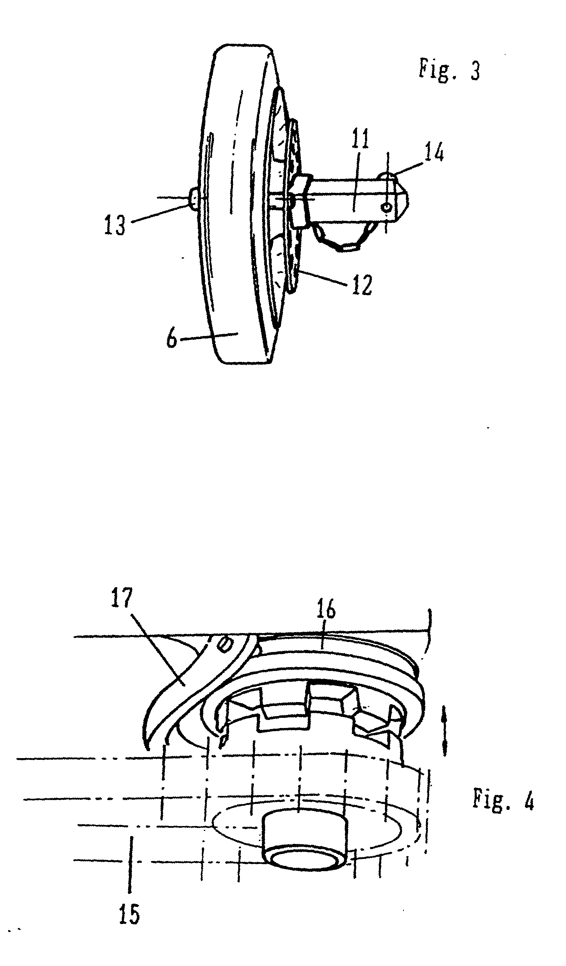

Chacune de ces roues (6) (voir figure 3) présente en parallèle et à l'intérieur d'un disque (12) disposant de multiples orifices radiaux pour que conjointement avec un boulon (13) traversant cette roue (6) et le disque (12), l'immobiliser à une position déterminée afin de faciliter les opérations de montage et de démontage de cette paire de roues (6) lors de la charge (8) (voir figure 6), car si l'on ne les pourvoit pas d'un moyen de mobilisation et si l'on ne place pas les roues (6), la charge roulerait par soi-même.

Dans la figure 4 on a représenté la transmision du moteur (2) aux roues motrices (5), laquelle est effectuée au moyen des chaines de transmission (15) parallèles au dispositif des deux côtés latéraux; ladite transmission est indépendante pour les deux roues, afin que dans l'une d'elles soit monté un déconnecteur de traction (16), actionné à partir d'un levier (17), dont la commande opérationnelle est dans le guidon (4), permetant d'accoupler et de découpler la transmission à une des roues et par conséquent d'effectuer des rotations dans le dispositif tracteur, car en cas contraire et étant donné la proximité entre les roues motrices (5) celà serait une opération très compliquée et difficile car le groupe moteur l'empêcherait.

Les roues motrices (5) et l'appui résultant (7) sont monté sur un groupe formé par un croisillon présentant une certaine oscillation par rapport à la structure du véhicule (1) afin que chacune de ces roues puisse se situer à différents niveaux permettant de franchir des petits obstacles ou dans certaines situations où elles circulent sur des rampes à différentes hauteurs.

Comme on a déjà mentionné auparavant, ce véhicule présente entre autre la particularité que les roues (6) sont partie intégrante de celui-ci ou à un moment donné il se libère de celles-ci pour les céder à la charge, tandis que les roues motrices (5) appuient à l'extrémité opposée et ainsi la charge passe à avoir trois points d'appui et de roulage, ce qui fait que son transport est très simple, en l'élément tracteur (1) se maintenant à cette position en position sensiblement horizontale, étant donné la configuration et la disposition présentée car ce point d'appui tend à équilibrer les forces de gravitation et le poids du dispositif par rapport à celle exercée par la charge, en la maintenant à cette position malgré son manque de roues complémentaires (6). Pour effectuer les opérations d'extraction desdites roues (6), le véhicule (1) dispose dans la structure arrière (3) (voir figure 5 et 1) sur laquelle est monté le guidon (4), qui comprend sur sa partie inférieure une crémaillère (18) muni à l'extrémité de roues supplémentaires (19) et un moyen de remise en place (20) de celles-ci verticalement, afin de pouvoir se placer à une position inférieure en appuyant lesdites roues supplémentaires (19) et en maintenant le véhicule (1) en appui sur celles-ci et sur les roues motrices (5), les roues étant alors levées (6) pour faciliter leur extraction ou leur mise en place, ou dans une autre posision dans laquelle ces roues supplémentaires (19) sont levées et par conséquent non opérationnelles.

De cette façon et pour faciliter la mise en place des roues supplémentaires (6) ou introduire le point d'appui (7) sous la charge et sa retenue par le boulon (10) on disposera d'un verin ou de tout autre moyen mécanique conventionnel.

Les termes de la rédaction de ce mémoire devront être pris dans un sens large et non pas limitatif.

Les matières, forme et disposition des éléments seront susceptibles de varier sans toutefois que celà ne suppose une modification des caractéristiques essentielles de l'invention revendiquées à la suite.

## Revendications

1. Dispositif pour le transport de charges, formé par un moyen tracteur (1) comprenant une structure support d'un moteur d'actionnement (2) et d'un ensemble de commandes (4), ladite structure étant prolongée vers la zone avant où est incorporé un siège (7) d'appui de la charge à transporter, **caractérisé en ce que** ledit siège (7) est encadré par les roues motrices (5), et **en ce que** la zone centrale présente des roues (6) montées en demi-axes extractibles demeurant dans le dispositif pour leur transport libre de charge, ou pouvant être cédées à la charge (8), où elles sont montées par une des extrémités, tandis que par l'extrémité opposée de la charge est placé ledit siège (7), pour la supporter suspendue sur trois points d'appui configurés par des moyens de roulage, tandis que le corps tracteur (1) est maintenu en position élevée, sensiblement horizontale, pour, avec son aide, déplacer la charge et la conduire même par des endroits difficiles d'y accéder.

2. Dispositif, selon la revendication antérieure, **caractérisé en ce que** ledit siège (7) présente un roulement axial (9) permettant la rotation de l'appui du tracteur par rapport à la charge afin de pouvoir prendre des courbes ayant des angles importants.

3. Dispositif, selon les revendications antérieures, **caractérisé en ce que** ledit siège (7) présente un orifice axial où est introduit un boulon (10) dépassant par-dessus de celui-ci pour, une fois introduit dans la charge (8) dans un orifice équivalent, établir le point de tirage approprié.

4. Dispositif, selon les revendications antérieures, **caractérisé en ce que** chacune des roues extractibles (6) du moyen tracteur (1) est montée en demi-axe (11) introduite dans celui-ci ou dans la charge, en étant retenue en position par une cheville aimantée (14); le dispositif se caractérisant aussi **en ce que** ledit axe (11) incorpore parallèlement à la roue (6) un disque (12) présentant de multiples orifices radiaux pour, conjointement avec un boulon (13) traversant le disque et la roue, la bloquer à une position fixe, tandis que les travaux de montage ou démontage de la charge sont effectués.

5. Dispositif, selon les revendications antérieures, **caractérisé en ce que** la transmission du moteur aux roues motrices (5) est effectuée d'une façon indépendante au moyen des chaines de transmission (15) qui circulent latéralment et **en ce que** celles-ci incorporent un déconnecteur de traction (16) actionné à partir d'un levier (17) connectant avec la commande correspondante située sur un guidon (4), pour ainsi faciliter la rotation de l'équipement tracteur, aussi bien libre de charge que lors de l'entraînement de celle-ci.

6. Dispositif, selon les revendications antérieures, **caractérisé en ce que** sur la partie arrière et montée sur la structure même (3) montée supérieurement sur le guidon (4), sont incorporées sur la zone inférieure des roues supplémentaires (19), associées à une crémaillère (18) et à un moyen (20) de remise en place et de retenue de celles-ci dans le sens vertical, permettant de maintenir suspendu l'équipement tracteur au cours des opérations de mise en place ou d'extraction des roues arrière (6).

7. Dispositif, selon les revendications antérieures, **caractérisé en ce que** les roues motrices (5) et l'appui résultant (7) sont montés sur un croisillon permettant une certaine oscillation latérale et par conséquent la situation des roues motrices (5) à différents niveaux pour franchir des petits obstacles.

## Patentansprüche

1. Vorrichtung zum Befördern einer Ladung, gebildet von einem Zugmittel (1), das eine Tragstruktur für einen Antriebsmotor (2) und einen Bedienungssatz (4) umfasst, wobei die besagte Struktur sich zur Vorderseite hin verlängert, wo diese ein Stützlager (7) für die zu transportierende Ladung einschließt, **dadurch gekennzeichnet, dass** das besagte Lager (7) von den Antriebsrädern (5) umgeben ist und dass der mittlere Bereich Räder (6) aufweist, die auf herausnehmbare Halbachsen eingebaut sind und an der Vorrichtung zur ihrer ladungsfreie Beförderung bleiben, wobei diese der Ladung (8) abgegeben werden können, an welche sie an einem der Enden aufgestellt werden, wohingegen am gegenüberliegenden Ende der Ladung das besagte Lager (7) angebracht wird, um diese an drei durch Rollmittel ausgebildeten Stützpunkte gelagert zu halten, während der Zugkörper (1) in angehobener praktisch waagerechter Position verbleibt, um mit seiner Hilfe die Ladung sogar durch schwerzugängliche Stellen zu befördern.

2. Vorrichtung nach dem vorhergehenden Anspruch, **dadurch gekennzeichnet, dass** das besagte Lager (7) ein Axialwälzlager (9) aufweist, welches die Rotation der Zugmittelstütze in Bezug auf die Ladung ermöglicht, um Kurven mit weiten Winkeln fahren zu können.

3. Vorrichtung nach den vorhergehenden Ansprüchen, **dadurch gekennzeichnet, dass** das besagte Lager (7) eine axiale Öffnung aufweist, in welche ein aus dieser herausragenden Bolzen (10) eingeführt wird, um nach dessen Einführung in einer gleichwertigen Öffnung der Ladung (8) den geeigneten Zugpunkt festzusetzen.

4. Vorrichtung nach den vorhergehenden Ansprüchen, **dadurch gekennzeichnet, dass** jedes der aus dem Zugmittel (1) herausnehmbaren Räder (6) auf einer Halbachse (11) eingebaut wird, die in diesem oder in der Ladung eingeführt wird, wo diese durch einen magnetischen Stift (14) an seiner Position gehalten wird; wobei die Vorrichtung auch **dadurch gekennzeichnet ist, dass** die besagte Achse (11) parallel zum Rad (6) eine Scheibe (12) einschließt, die vielfache Radialöffnungen aufweist, um zusammen mit einem Bolzen (13), der die Scheibe und das Rad durchquert, dieses in einer festen Position zu blockieren, während die Arbeiten zur Aufstellung oder zum Ausbau der Ladung durchgeführt werden.

5. Vorrichtung nach den vorhergehenden Ansprüchen, **dadurch gekennzeichnet, dass** die Kraftübertragung vom Motor auf die Antriebsräder (5) unabhängig mittels Antriebsketten (15), die seitlich verlaufen, durchgeführt wird, und dass diese ein Zugtrennungselement (16) einschließen, das von einem Hebel (17), der mit dem entsprechenden an einem Lenker (4) angeordneten Steuerelement angeschlossen ist, betätigt wird, um so die Rotation der Zugeinrichtung sowohl im ladungsfreien Zustand als auch während des Ziehens der Ladung zu erleichtern.

6. Vorrichtung nach den vorhergehenden Ansprüchen, **dadurch gekennzeichnet, dass** im hinteren Bereich und auf der eigentlichen Struktur (3) angeordnet, oberhalb welcher der Lenker (4) angeordnet ist, im unteren Bereich Zusatzräder (19) eingebaut sind, die mit einer Zahnstange (18) und einem Mittel (20) zur Positionierung und zum Halten (20) derselben in vertikaler Position verbunden sind, wodurch ermöglicht wird, dass die Zugeinrichtung während der Vorgänge der Anbringung und Entnahme der hinteren Räder (6) suspendiert gehalten wird.

7. Vorrichtung nach den vorhergehenden Ansprüchen, **dadurch gekennzeichnet, dass** die Antriebsräder (5) und die resultierende Stütze (7) an einem Kreuzkopf eingebaut sind, der eine gewisse seitliche Schwingung und dadurch die Positionierung der Antriebsräder (5) bei unterschiedlichen Stufen zur Überwindung kleiner Hindernisse zulässt.

## Claims

1. A device for carrying loads, formed by a pulling means (1) comprising a support structure of a drive motor (2) and of a set of controls (4), said structure being extended toward the front area where it incorporates a seat (7) supporting the load to be carried, **characterized in that** said seat (7) is surrounded by the drive wheels (5) and **in that** the central area has wheels (6) mounted on removable axle shafts which remain in the device for the load-free transport thereof, being transferable to the load (8), wherein they are mounted at one of the ends, whereas said seat (7) is placed at the opposite end of the load for supporting it suspended at three support points configured by rolling means, whereas the pulling body (1) is maintained in a raised, virtually horizontal position so as to move the load with its help and drive it even through areas of difficult access.

2. A device according to the previous claim, **characterized in that** said seat (7) has an axial bearing (9) which enables tractor support rotation with regard to the load in order to be able to go around curves with sharp angles.

3. A device according to the previous claims, **characterized in that** said seat (7) has an axial hole wherein a bolt (10) projecting above it is inserted to establish the suitable pulling point once it is introduced in an equivalent hole in the load (8).

4. A device according to the previous claims, **characterized in that** each one of the extractable wheels (6) of the pulling means (1) is mounted on a axle shaft (11) which is introduced in it or in the load, being held in position by a magnetized pin (14); the device also being **characterized in that**, parallel to the wheel (6), said axle (11) incorporates a disc (12) having multiple radial holes to lock it, in combination with a bolt (13) going through the disc and the wheel, in a fixed position while the tasks of assembly and disassembly of the load are carried out.

5. A device according to the previous claims, **characterized in that** transmission from the motor to the drive wheels (5) is carried out independently by means of drive chains (15) running laterally, and **in that** the latter incorporate a drive disconnector (16), actuated from a lever (17) which connects to the corresponding control located in a handle (4), to thus facilitate the rotation of the pulling equipment, both load-free and during the pulling thereof.

6. A device according to the previous claims, **characterized in that** in the rear portion and mounted on the structure (3) itself mounted on the upper portion of the handle (4), additional wheels (19) associated to a rack (18) and means (20) for moving and retaining thereof in the vertical direction, which allow to maintain the pulling equipment suspended during the operations of placing or removing the rear wheels (6), are incorporated in the lower area.

7. A device according to the previous claims, **characterized in that** the drive wheels (5) and the resulting support (7) are mounted on a crosspiece which enables a certain side swinging and, accordingly, placement of the drive wheels (5) at different levels for overcoming small obstacles.
